# EUROPÄISCHE PATENTSCHRIFT

(11) **EP 1 559 468 B1**
(45) Veröffentlichungstag und Bekanntmachung des Hinweises auf die Patenterteilung: **12.03.2008**
(21) Anmeldenummer: 04405543.2
(22) Anmeldetag: 31.08.2004
(51) Int. Cl.: B01D 29/03, B01D 29/52

(54) **Siebwand zum Abschirmen eines Saugraums**
Strainer for shielding a suction inlet
Tamis pour protéger une bouche d'aspiration

(30) Priorität: 29.01.2004 EP 04405055
(43) Veröffentlichungstag der Anmeldung: 03.08.2005
(73) Patentinhaber: CCI AG, 8404 Winterthur (CH)
(72) Erfinder: Kielbowicz, Stanislaw, 8820 Wädenswil (CH)
(74) Vertreter: Sulzer Management AG

(56) Entgegenhaltungen:
- DE-A- 3 004 682
- US-A- 4 049 406
- US-A1- 2003 196 950

## Beschreibung

Die Erfindung betrifft eine Siebwand zum Abschirmen eines Saugraums und einer daran angeschlossenen Saugleitung gemäss Oberbegriff von Anspruch 1.

Ein Reaktor in einem Kernkraftwerk ist von einem Sicherheitsbehälter aus Beton und Stahl, dem sogenannten Containment, umgeben. Weiter ist der Reaktor mit einem Notkühlsystem (im Englischen Emergency Core Cooling System oder ECCS beziehungsweise Containment Spray System oder CSS genannt) ausgestattet, um den Reaktorkern in einem Störfall zu kühlen. In einem solchen Fall wird das Wasser aus dem untersten Teil des Sicherheitsbehälters, dem sogenannten Sumpf, durch Notkühlpumpen über Saugleitungen angesaugt und umgewälzt.

Im Auslegungs-Szenarium für das Notkühlsystem wird davon ausgegangen, dass bei einem Störfall entstehender Schutt (englisch: debris) in den Sumpf hinunterfällt und/oder durch das abfliessende Wasser in den Sumpf hinuntergespült wird. Damit dieser Schutt die Funktionstüchtigkeit des Notkühlsystems nicht beeinträchtigen kann, sind vor den Eintrittsöffnungen der zu den Notkühlpumpen führenden Saugleitungen spezielle Abschirmelemente, im Folgenden Schutzsiebe genannt, vorgesehen. Diese haben die Aufgabe, den aus dem Störfall resultierenden Schutt zurückzuhalten und gleichzeitig einen ausreichenden Wasserdurchsatz zu gewährleisten. Dabei muss sichergestellt sein, dass der durch den Schutt verursachte Druckabfall den zulässigen Grenzwert nicht überschreitet.

Bisher bekannte, in Kernkraftwerken mit Druckwasserreaktoren (DWR) eingesetzte Schutzsiebe sind meist als flache Gittersegmente ausgebildet, die nur eine kleine Siebfläche aufweisen und die einen unzulässig hohen Druckabfall erzeugen können. Schutzsiebelemente aus gewelltem und perforierten Blech bieten eine grössere wirksame Siebfläche. Unter Druckbelastung treten jedoch Verformungen auf, welche die Grösse derartiger Schutzsiebelemente begrenzen. In EP 0 818 227 A1 wird ein zylindrisches Saugsieb beschrieben, das zwar eine sehr grosse wirksame Siebfläche aufweist, aber nur in seltenen Fällen im Sumpfbereich eines DWR Kernkraftwerks einsetzbar ist, da die direkte Umgebung der Eintrittsöffnungen der Saugleitungen bauliche derart gestaltet ist, dass sie für den Einsatz zylindrischer Saugsiebe wenig geeignet ist. Meist ist vor den Eintrittsöffnungen der Saugleitungen ein Saugraum für den Einbau von Schutzsiebelementen mit geeigneter Siebfläche vorgesehen.

Aufgabe der Erfindung ist es, ein Schutzsieb zur Verfügung zu stellen, dessen wirksame Siebfläche wesentlich, z.B. um ein Mehrfaches, grösser ist, als die sich aus den äusseren Abmessungen ergebende Fläche, und das zum Abschirmen eines Saugraums und einer daran angeschlossenen Saugleitung im Sumpfbereich eines DWR Kernkraftwerks eingesetzt werden kann.

Diese Aufgabe wird erfindungsgemäss durch die in Anspruch 1 definierte Siebwand gelöst. Die erfindungsgemässe Siebwand zum Abschirmen eines Saugraums und einer daran angeschlossenen Saugleitung in einem Notkühlsystem eines Kernkraftwerks umfasst mindestens ein Siebwandelement, das eine Einlassseite und eine Abflussseite aufweist, wobei die Einlassseite, gesamthaft oder partiell, geneigt oder senkrecht orientiert ist. Das Siebwandelement ist aus einer oder mehreren modularen Kassetteneinheiten aufgebaut, wobei die Kassetteneinheiten jeweils mehrere, zur Einlassseite hin offene Siebelemente enthalten, die mit der Abflussseite verbunden sind. Vorzugsweise ist die Höhe des Siebwandelementes grösser als 0.5 m und mit Vorteil grösser als 1 m.

In einer bevorzugten Ausführungsvariante umfasst die Siebwand mindestens zwei Siebwandelemente, deren Abflussseiten gegeneinander orientiert sind und in einen gemeinsamen Abflusskanal münden, der beispielsweise zwischen den Siebwandelementen und/oder unterhalb der Siebwandelemente ausgebildet sein kann. Selbstverständlich ist es auch möglich, mehrere derartige Siebwände im Sicherheitsbehälter vorzusehen und die gemeinsamen Abflusskanäle bei Bedarf miteinander zu verbinden.

In einer bevorzugten Ausführungsform sind die Kassetteneinheiten aneinanderreihbar, um das Siebwandelement in der gewünschten Grösse zusammenzustellen. Die Kassetteneinheiten können beispielsweise viereckig und/oder länglich ausgebildet sein. Weiter können die Kassetteneinheiten in einer oder zwei Richtungen, beispielsweise horizontal und/oder vertikal aneinanderreihbar sein.

Vorzugsweise enthalten die Kassetteneinheiten beabstandet angeordnete Wände und/oder Zwischenwände, welche Wände beziehungsweise Zwischenwände beispielsweise mittels Verbindungselementen wie z.B. Schrauben oder Bolzen miteinander verbunden und/oder gegeneinander verspannt sind. Vorzugsweise sind die Wände und/oder Zwischenwände der Kassetteneinheiten als Doppelwände und/oder Abflussspalte ausgebildet. Vorzugsweise ist der Abstand zwischen zwei Wänden und/oder Zwischenwänden und/oder der Abstand zwischen den beiden Seiten einer Doppelwand durch Distanzelemente bestimmt.

In einer weiteren bevorzugten Ausführungsform sind die Siebelemente als Siebtaschen ausgebildet, die von Abflussspalten umgeben sind, welche Abflussspalten mit der Abflussseite verbunden sind oder zur Abflussseite hin offen sind. Vorzugsweise sind die Siebtaschen jeweils auf vier Seiten von Abflussspalten umgeben.

In einer bevorzugten Ausführungsvariante enthalten die Kassetteneinheiten zwischen den Wänden beziehungsweise Zwischenwänden gebogene, insbesondere im Wesentlichen u-förmig gebogene, perforierte Wandsegmente, um die Saugtaschen zu bilden. Eine Mehrzahl von u-förmig gebogenen Wandsegmenten können beispielsweise in einem länglichen, mäandrisch geformten Teil ausgebildet sein. Vorzugsweise weisen die Saugtaschen eine Tiefe von grösser als 0.1 m, insbesondere grösser als 0.2 m auf. Vorzugsweise sind die Wände und/oder Zwischenwände und/oder die u-förmig gebogenen Wandsegmente aus perforiertem, insbesondere gelochtem Blech gefertigt.

Die erfindungsgemässe Siebwand hat den Vorteil, dass mit den Kassetteneinheiten relativ grossflächige und vergleichsweise flache Siebwandelemente zusammengestellt werden können. D.h., dass die Länge und Breite der Siebwandelemente in einem weiten Bereich wählbar ist, während die Dicke im Vergleich zur Länge und/oder Breite typischerweise deutlich kleiner ist. Weiter ist es möglich mehrere Siebwandelemente zu einer grösseren Siebwand zusammenzustellen, die entsprechend den Platzverhältnissen im Sicherheitsbehälter auch komplexere Formen aufweisen kann. Mit Vorteil werden auch Anordnungen bestehend aus mehreren Siebwänden eingesetzt, die beispielsweise entlang der Wände des Sicherheitsbehälters vorgesehen sein können. Damit eignen sich die erfindungsgemässen Siebwände besonders zum Abschirmen eines oder mehrerer Saugräume und der daran angeschlossenen Saugleitungen im Sumpfbereich eines DWR Kernkraftwerks.

Die erfindungsgemässe Siebwand eignet sich insbesondere auch zum Nachrüsten bestehender Anlagen, in denen ein Schutzsieb mit ungenügender Siebfläche unter eingeschränkten Platzverhältnissen und bedarfsweise unter Beibehaltung der ursprünglichen Aussenabmessungen durch eine Schutzwand mit grösserer wirksamer Siebfläche ersetzt werden soll oder muss. Besonders vorteilhaft ist, dass die taschenförmige Gestaltung der Siebfläche einen in fünf Richtungen abfliessenden Penetrationsfluss ermöglicht. Die erfindungsgemässe Siebwand weist typischerweise eine fünfbis zwanzigmal grössere wirksame Siebfläche auf als ein Schutzsieb bestehend aus einer ebenen Siebfläche mit entsprechenden Aussenabmessungen. Dank der grossen wirksamen Siebfläche verursachen die die Siebfläche belegenden Schuttmaterialien und die Wasser-Penetrationsgeschwindigkeit einen wesentlich geringeren Durchflusswiderstand, sodass der über die Siebwand entstehende Druckabfall entsprechend reduziert wird.

Ein weiterer Vorteil der erfindungsgemässen Siebwand ist die Druckbelastbarkeit der aus den Kassetteneinheiten zusammengestellten Siebwandelemente. Die Wände beziehungsweise Zwischenwände der Kassetteneinheiten und die Schenkel der U-förmig gebogenen Wandsegmente bilden ein gitterförmiges Netz von Verstärkungsrippen, sodass die Kassetteneinheiten eine hohe Formstabilität aufweisen und mit höherem Druck belastbar sind, als beispielsweise ein gewelltes Blech entsprechender Grösse. Durch ihre hohe Formstabilität können sie gleichzeitig als Schutzelemente dienen, um grössere Trümmer wirksam aufzufangen.

Weitere vorteilhafte Ausführungsformen gehen aus den abhängigen Ansprüchen und der Zeichnung hervor.

Im Folgenden wird die Erfindung an Hand der Ausführungsbeispiele und an Hand der Zeichnung näher erläutert. Es zeigen:
- Fig. 1: eine Schrägansicht eines Ausführungsbeispiels einer Siebwand gemäss vorliegender Erfindung,
- Fig. 2: eine Schrägansicht einer Ausführungsvariante einer Kassetteneinheit zu dem in Fig. 1 gezeigten Ausführungsbeispiel,
- Fig. 3: eine Schrägansicht eines weiteren Ausführungsbeispiels einer Siebwand gemäss vorliegender Erfindung,
- Fig. 4: eine Schrägansicht einer Kassetteneinheit des in Fig. 3 gezeigten Ausführungsbeispiels,
- Fig. 5: einen vergrösserten Ausschnitt einer Ausführungsvariante zu der in Fig. 4 gezeigten Kassetteneinheit,
- Fig. 6a: einen Querschnitt durch zwei nebeneinander liegende Saugtaschen gemäss einer weiteren Ausführungsvariante,
- Fig. 6b: einen Längsschnitt durch eine Reihe von Saugtaschen gemäss der in Fig. 6a gezeigten Ausführungsvariante, und
- Fig. 6c: eine Schrägansicht einer Saugtasche gemäss der in den Figuren 6a und 6b gezeigten Ausführungsvariante mit Markierung der Abflussrichtungen der Penetrationsströme.

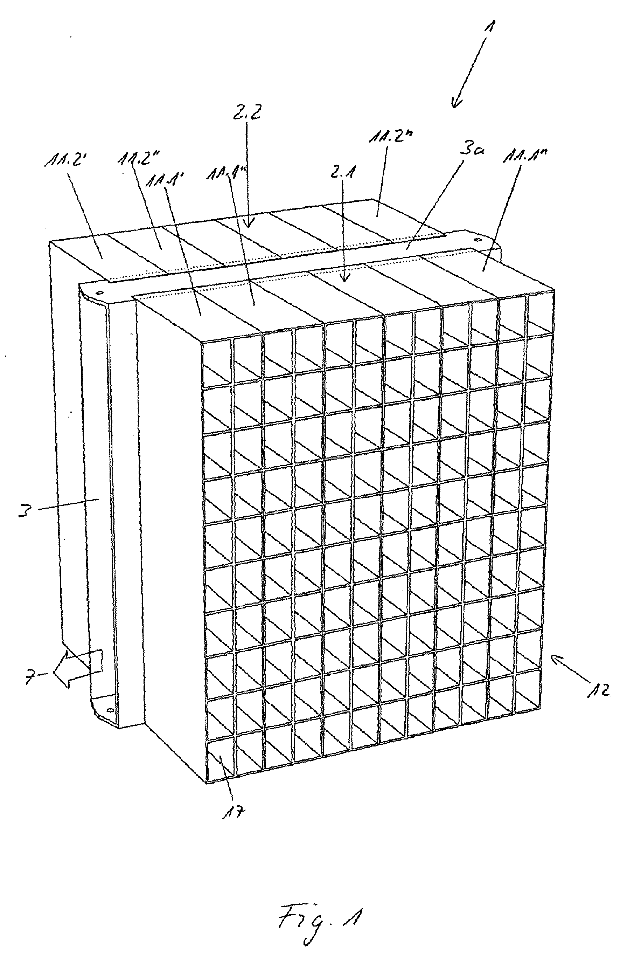

Fig. 1 zeigt eine Schrägansicht eines Ausführungsbeispiels einer Siebwand gemäss vorliegender Erfindung zum Abschirmen eines Saugraumes 3 und einer daran angeschlossenen Saugleitung in einem Notkühlsystem eines Kernkraftwerks, insbesondere eines DWR Kraftwerks. Die Siebwände gemäss Fig. 1 sind für den Einsatz im Sumpfbereich eines Reaktor-Sicherheitsbehälters vorgesehen. Im Ausführungsbeispiel umfasst die Siebwand 1 zwei im Wesentlichen senkrecht angeordnete Siebwandelemente 2.1, 2.2 und einen gemeinsamen Abflusskanal 3a, der beispielsweise zwischen den Siebwandelementen angeordnet sein kann. In dieser Anordnung dient das Innere des Abflusskanals gleichzeitig als Saugraum. Der in Fig. 1 gezeigte Abflusskanal 3a ist in Strömungsrichtung 7 offen dargestellt, um anzudeuten, dass derselbe wahlweise mit dem Abflusskanal einer weiteren Siebwand oder mit einer oder mehreren Saugleitungen verbunden werden kann. Die Saugleitungen und Pumpen des Notkühlsystems sind in Fig. 1 nicht dargestellt. Die Siebwand 1 schirmt den Saugraum 3 gegenüber dem Innern des Sicherheitsbehälters ab und verhindert, dass im Störfall Schutt und faserartige Materialien wie beispielsweise Teile aus Isolierstoffen, die vom Kühlwasser mitgeführt werden, in den Saugraum 3 und die Saugleitungen gelangen können.

Die Siebwandelemente 2.1, 2.2 weisen jeweils eine Einlassseite 12 auf, wobei sich die Einlassseite des hinteren Siebelementes 2.2 in der Schrägansicht von Fig. 1 auf der Rückseite der Siebwand 1 befindet und somit nicht sichtbar ist. Weiter weisen die Siebwandelemente 2.1, 2.2 jeweils eine der entsprechenden Einlassseite gegenüberliegende Abflussseite auf. Die Abflussseiten sind im Ausführungsbeispiel gegeneinander orientiert und münden in den gemeinsamen Abflusskanal 3a. In der Schrägansicht von Fig. 1 sind die Abflussseiten verdeckt und somit nicht sichtbar. Der Abflusskanal 3a kann beispielsweise derart zwischen den Siebwandelementen 2.1, 2.2 ausgebildet sein, dass die Abflussseiten der Siebwandelemente gross- oder ganzflächig in den Abflusskanal münden.

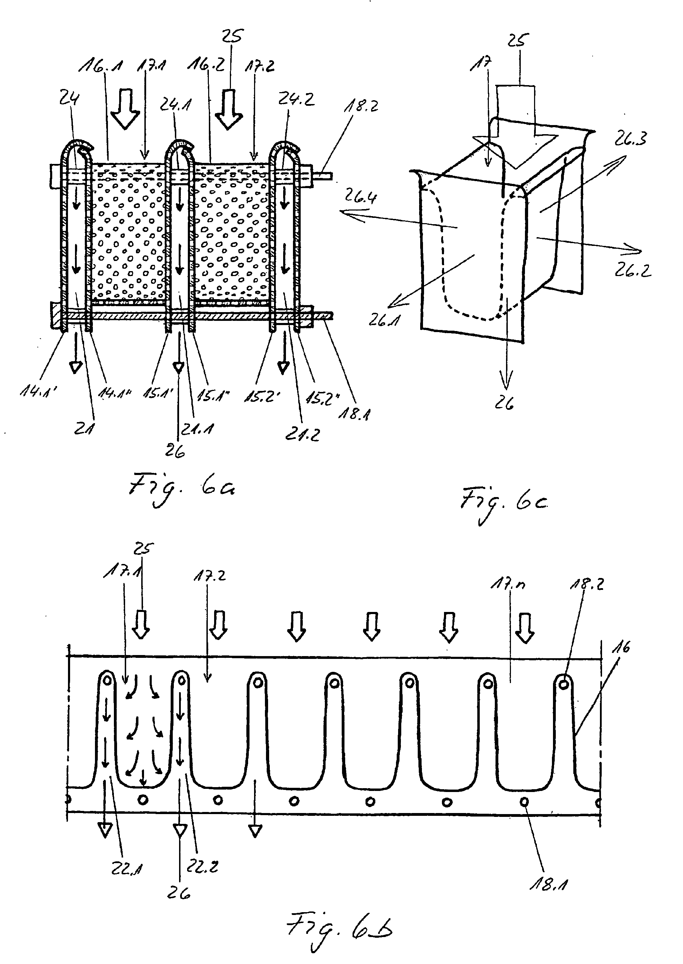

Die Siebwandelemente 2.1, 2.2 sind im Ausführungsbeispiel aus mehreren modularen Kassetteneinheiten 11.1'-11.1ⁿ, 11.2'-11.2ⁿ aufgebaut, die mehrere zur Einlassseite 12 hin offene Siebelemente 17 enthalten und die mit Vorteil aneinanderreihbar sind. Die Siebelemente 17 weisen mit Vorteil mindestens eine Biegung oder Krümmung auf, um die Siebfläche zu vergrössern. Eine bevorzugte Ausführungsvariante der Siebelemente 17 in Form von Siebtaschen wird im Zusammenhang mit den Figuren 6a-c näher erläutert. Die Höhe der Siebwandelemente 2.1, 2.2 wird vorzugsweise grösser als 0.5 m, insbesondere grösser als 1 m gewählt.

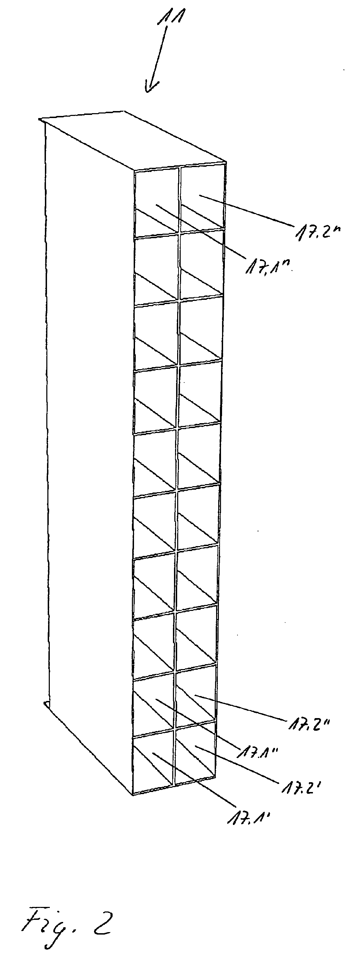

Fig. 2 zeigt eine Schrägansicht einer Ausführungsvariante einer Kassetteneinheit zu dem in Fig. 1 gezeigten Ausführungsbeispiel. Die Kassetteneinheit 11 ist viereckig und länglich ausgebildet und lässt sich wahlweise in horizontaler und/oder vertikaler Richtung mit gleichartigen Kassetteneinheiten aneinanderreihen. In dem in Fig. 1 gezeigten Ausführungsbeispiel erstrecken sich die Kassetteneinheiten über die gesamte Höhe der Siebwandelemente 2.1, 2.2, wobei die Kassetteneinheiten horizontal aneinandergereiht sind, um ein Siebwandelement geeigneter Breite zu bilden. Die Kassetteneinheit 11 enthält mehrere zur Einlassseite hin offene Siebelemente 17.1'-17.1ⁿ, 17.2'-17.2ⁿ. Vorzugsweise wird die Grösse und das Seitenverhältnis der Einlassfläche der Kassetteneinheit 11 derart gewählt, dass die Kassetteneinheit günstig herstellbar, einfach transportierbar und einfach montierbar ist. Dabei hat sich ein Kassettengewicht von typisch 40 kg als günstig erwiesen, da eine derartige Kassetteneinheit ohne Schwierigkeiten von zwei Personen getragen und im Sicherheitsbehälter montiert werden kann.

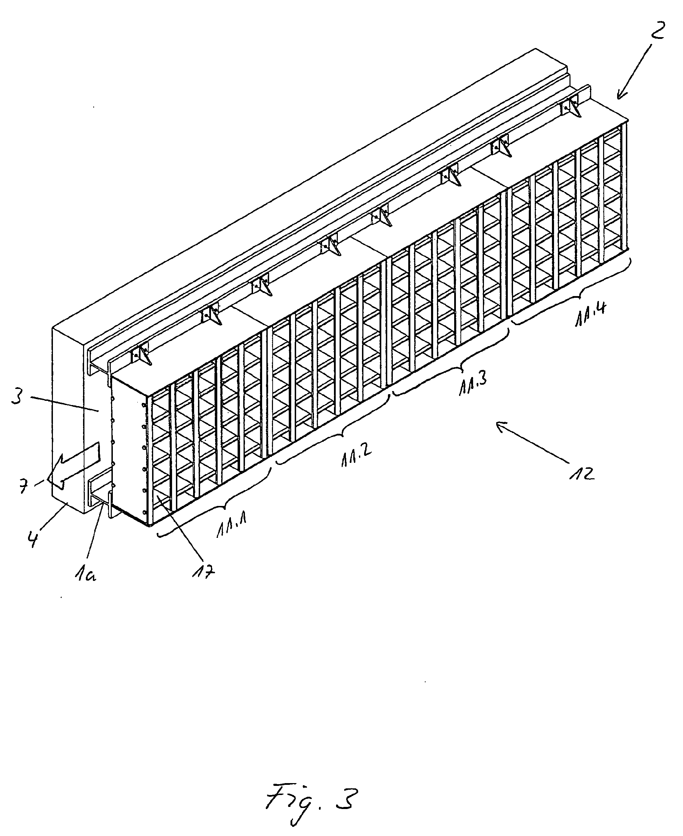

Fig. 3 zeigt eine Schrägansicht eines weiteren Ausführungsbeispiels einer Siebwand gemäss vorliegender Erfindung. Die Siebwand des zweiten Ausführungsbeispiels umfasst ein Siebwandelement 2, das aus vier modularen, viereckigen Kassetteneinheiten 11.1-11.4 zusammengestellt ist, die seitlich in einer Richtung aneinandergereiht angeordnet sind. Selbstverständlich können die Anzahl und die Anordnung der Kassetteneinheiten variiert werden, um Siebwandelemente der gewünschten Grösse zusammenzustellen. Der Aufbau der Kassetteneinheiten 11.1-11.4 wird in den folgenden Abschnitten näher erläutert. Das Siebwandelement 2 weist eine Einlassseite 12 und eine Abflussseite auf, die in der vorliegenden Schrägansicht nicht sichtbar ist. Das Siebwandelement 2 grenzt an einen Saugraum 3, der auf einer Seite durch das Siebwandelement gebildet wird und auf der gegenüberliegenden Seite durch ein Wandelement 4, das beispielsweise als zweites Siebwandelement oder als feste Platte ausgebildet sein kann. Mit Vorteil kann als Wandelement 4 auch eine Betonplatte eines Sicherheitsbehälters verwendet werden oder ein anderes Konstruktionsteil am oder im Sicherheitsbehälter eines Kernkraftwerks. Auf dem Wandelement 4 sind im Ausführungsbeispiel zwei parallele Träger- und/oder Abstandselemente 1a angeordnet, an denen das Siebwandelement 2 befestigt ist. Die Träger- beziehungsweise Abstandselemente, die beispielsweise als H-förmige Stahlprofile ausgeführt sein können, dienen gleichzeitig als seitliche Begrenzung des Saugraums 3.

In Fig. 3 ist der Saugraum 3 in Strömungsrichtung 7 offen dargestellt, damit der Aufbau der Siebwand besser erkennbar ist. Um den Aufbau zu vervollständigen muss der Saugraum 3 auf der oder den noch offenen Seiten mittels Wandelementen geschlossen werden, und falls sich die Eintrittsöffnung der Saugleitung ausserhalb des dargestellten Bereichs befindet, zusätzlich entsprechend verlängert werden.

In einer bevorzugten Ausführungsvariante sind mehrere Begrenzungsflächen eines Saugraums mittels Siebwandelementen abgeschirmt, wobei mindestens eine Einlassseite oder ein Teil einer Einlassseite eines Siebwandelementes geneigt oder senkrecht orientiert ist. Auf diese Weise ist es möglich, eine der baulichen Umgebung angepasste Siebwand beziehungsweise einen entsprechenden Siebwandkörper zu bilden.

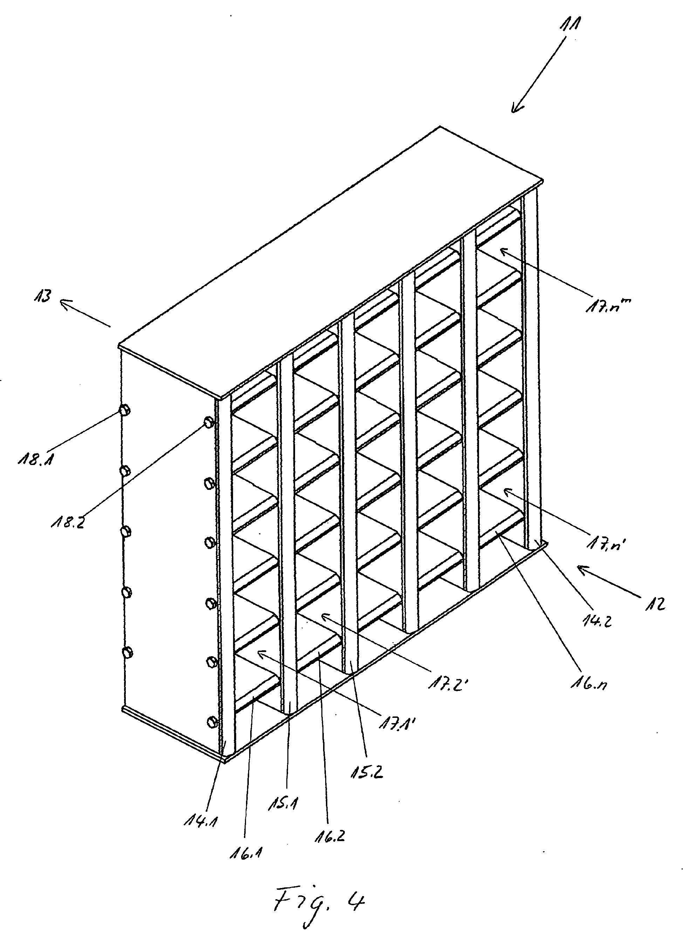

Fig. 4 zeigt eine Schrägansicht einer Kassetteneinheit des in Fig. 3 gezeigten Ausführungsbeispiels. Die Kassetteneinheit 11 weist eine Einlassseite 12 und eine Abflussseite 13 auf und umfasst Aussenwände 14.1, 14.2 und je nach Bedarf eine oder mehrere Zwischenwände 15.1, 15.2, welche Aussenwände und Zwischenwände beabstandet voneinander angeordnet sind. Weiter umfasst die Kassetteneinheit 11 zwischen den Aussenwänden 14.1, 14.2 beziehungsweise Zwischenwände 15.1, 15.2 gebogene und perforierte Wandsegmente 16.1-16.n, um Sautaschen 17.1'-17.n^{m} zu bilden. Die gebogenen Wandsegmente können beispielsweise u-förmig, v- förmig oder ähnlich ausgebildet sein. Mit Vorteil sind in einer Reihe angeordnete Wandsegmente 16.1-16.n als länglich geformte, mäandrische Teile ausgebildet. Die Wände 14.1, 14.2 und/oder Zwischenwände 15.1, 15.2, und/oder die gebogenen Wandsegmente 16.1-16.n sind vorzugsweise aus gelochtem Blech gefertigt. Der Durchmesser der Perforationslöcher liegt typisch im Bereich von 1 bis 10 mm, vorzugsweise 2 bis 5 mm. Vorzugsweise weisen die Saugtaschen 17.1'-17.n^{m} eine Tiefe von grösser als 0.1 m, insbesondere grösser als 0.2 m auf. Die Wände 14.1, 14.2 und/oder Zwischenwände 15.1, 15.2 sind im Ausführungsbeispiel mittels Verbindungselementen 18.1, 18.2 verbunden und/oder gegeneinander verspannt.

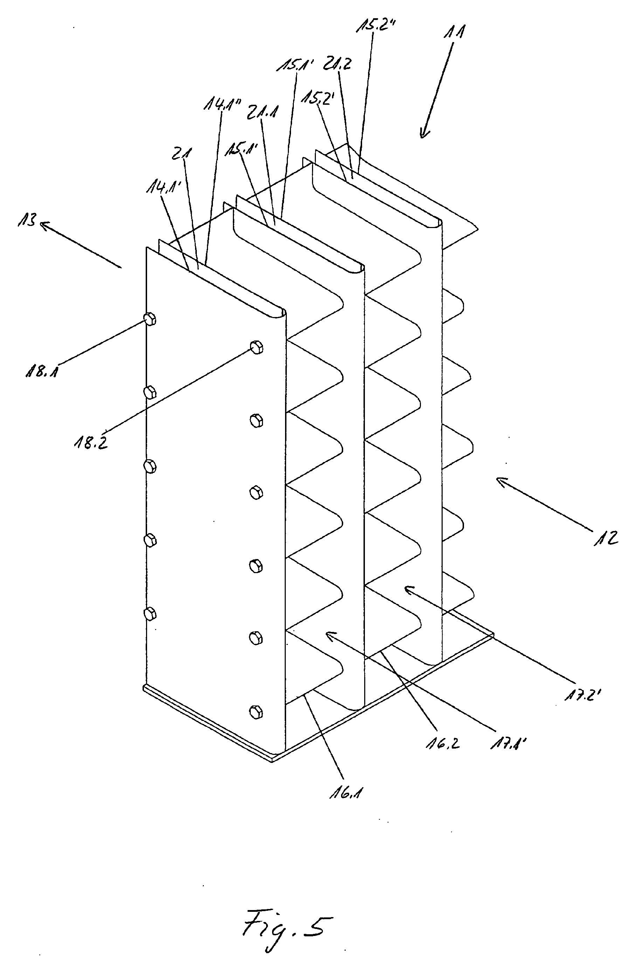

Fig. 5 zeigt einen vergrösserten Ausschnitt einer Ausführungsvariante zu der in Fig. 4 gezeigten Kassetteneinheit in Schrägansicht. In dieser Ausführungsvariante sind die Wände und/oder Zwischenwände der Kassetteneinheiten 11 perforiert und als Doppelwände 14.1', 14.1 ", 14.2', 14.2", 15.1', 15.1", 15.2', 15.2" ausgebildet. Vorzugsweise sind die Doppelwände zur Einlassseite 12 hin geschlossen und zur Abflussseite 13 hin offen, sodass sie Abflussspalten 21, 21.1, 21.2 bilden. Dank der Doppelwände sind die Saugtaschen 17.1', 17.2' auf mindestens zwei Seiten von den genannten Abflussspalten 21, 21.1, 21.2 umgeben, durch die das aus den Saugtaschen in die Doppelwände fliessende Wasser abfliessen kann.

Fig. 6a zeigt einen Querschnitt durch zwei nebeneinander liegende Saugtaschen gemäss einer Ausführungsvariante der vorliegenden Erfindung. Die Wände und Zwischenwände sind in dieser Ausführungsvariante ebenfalls als Doppelwände 14.1', 14.1", 14.2', 14.2", 15.1', 15.1" ausgeführt. Die Doppelwände werden z.B. aus jeweils zwei perforierten, beabstandet angeordneten Wandteilen gebildet, die derart ausgebildet sind, dass die Doppelwände zur Einlassseite hin abgeschlossen sind, während sie zur Abflussseite hin offen sind. Zwischen den Doppelwänden 14.1', 14.1", 14.2', 14.2", 15.1', 15.1" sind jeweils perforierte, u-förmig gebogene Wandsegment 16.1, 16.2 angeordnet, die zusammen mit den Doppelwänden Saugtaschen 17.1 17.2 bilden. Die Doppelwände dienen dabei als seitliche Abflussspalte 21, 21.1 21.2, durch die seitliche Penetrationsströme aus den Saugtaschen abfliessen können. Das Bezugszeichen 25 bezeichnet dabei die einlassseitige Zuflussrichtung und das Bezugszeichen 26 die Abflussrichtung. Weitere Penetrationsströme aus den Saugtaschen fliessen durch die perforierten, u-förmig gebogenen Wandsegment 16.1, 16.2. Die Doppelwände 14.1', 14.1", 14.2', 14.2", 15.1', 15.1" beziehungsweise die Wandteile derselben sind mittels Verbindungselementen 18.1, 18.2, die beispielsweise als Schrauben, Gewindebolzen oder Bolzen ausgebildet sein können, verbunden und gegeneinander verspannt. Der gegenseitige Abstand der Wandteile in den Doppelwänden kann beispielsweise durch Distanzelemente 24, 24.1, 24.2 festgelegt sein, während der Abstand zwischen den Doppelwänden durch die perforierten, u-förmig gebogenen Wandsegmente 16.1, 16.2 bestimmt ist.

Fig. 6b zeigt einen Längsschnitt durch eine Reihe von Saugtaschen gemäss der in Fig. 5a gezeigten Ausführungsvariante. Eine Reihe von perforierten, u-förmig gebogenen Wandsegmenten sind in einem länglich geformten, mäandrischen Teil 16 ausgebildet. Dieser Teil kann durch Biegeoperationen günstig hergestellt werden, beispielsweise aus gelochtem Blech. Im mäandrischen Teil 16 sind zwischen den u-förmig gebogenen Wandsegmenten Abflussspalte 22.1, 22.2 ausgebildet, die zur Einlassseite hin geschlossen und zur Abflussseite hin offen sind. Das Bezugszeichen 25 bezeichnet dabei die einlassseitige Zuflussrichtung und das Bezugszeichen 26 die Abflussrichtung. Die u-förmig gebogenen Wandsegmente bilden zusammen mit den Wänden beziehungsweise Doppelwänden die Saugtaschen 17.1-17.n.

Die Saugtaschen gemäss der in den Fig. 6a und 6b gezeigten Ausführungsvariante haben den Vorteil, dass sie auf vier Seiten von Abflussspalten 21.1, 21.2, 22.1, 22.2 umgeben sind. Zusätzlich kann der Penetrationsfluss, der durch den Boden der Saugtaschen gesogen wird, direkt zur Abflussseite hin abfliessen, d.h. der Abfluss des Penetrationsflusses aus den Saugtaschen erfolgt allseitig ohne störenden Widerstand. Fig. 6c zeigt eine Schrägansicht einer derartigen Saugtasche 17 mit Markierung der Abflussrichtungen 26, 26.1, 26.2, 26.3, 26.4 der Penetrationsströme.

Die erfindungsgemässen Siebwände sind für den Einsatz im Sumpfbereich eines Reaktor-Sicherheitsbehälters vorgesehen. Dank der geneigten oder senkrechten Einlassfläche und der modularen Bauweise können die Siebwände individuell an die Platzverhältnisse im Sicherheitsbehälter angepasst werden. Im Vergleich zu ebenen Schutzsieben herkömmlicher Bauart weisen Siebwände gemäss der vorliegenden Erfindung bei gleicher Länge und Breite eine wesentlich grössere wirksame Siebfläche auf. Schutt und Materialien, welche die Siebfläche belegen, verursachen daher einen wesentlich geringeren Durchflusswiderstand, sodass der über die erfindungsgemässe Siebwand entstehende Druckabfall entsprechend reduziert wird. Ein weiterer Vorteil der erfindungsgemässen Siebwände ist die vergleichsweise hohe Formstabilität und Druckbelastbarkeit sowie die robuste Bauweise, die Montage- und Reparaturarbeiten erleichtert.

## Patentansprüche

1. Anordnung bestehend aus einer oder mehreren Siebwänden, um einen oder mehrere Saugräume (3) und die daran angeschlossenen Saugleitungen in einem Notkühlsystem eines Kernkraftwerks abzuschirmen, welche Siebwand (1) beziehungsweise welche Siebwände jeweils mindestens ein Siebwandelement (2, 2.1, 2.2) umfassen, das eine Einlassseite (12) und eine Abflussseite (13) aufweist, **dadurch gekennzeichnet, dass** die Einlassseite (12) geneigt oder senkrecht orientiert ist, dass das Siebwandelement (2, 2.1, 2.2) aus einer oder mehreren modularen Kassetteneinheiten (11, 11.1-11.4, 11.1'-11.1n, 11.2'-11.2n) aufgebaut ist, und dass die Kassetteneinheiten jeweils mehrere, zur Einlassseite (12) hin offene Siebelemente (17, 17.1-17.n, 17.1'-17.nm) enthalten, welche Siebelemente als Siebtaschen ausgebildet sind, die von Abflussspalten (21,21.1. 21.2, 22.1, 22.2) umgeben sind, welche Abflussspalten mit der Abflussseite (13) verbunden sind.

2. Anordnung nach Anspruch 1, wobei die Höhe des Siebwandelementes (2, 2.1, 2.2) grösser als 0.5 m und insbesondere grösser als 1 m ist.

3. Anordnung nach einem der Ansprüche 1 oder 2 umfassend mindestens zwei Siebwandelemente (2, 2.1, 2.2), deren Abflussseiten (13) gegeneinander orientiert sind und in einen gemeinsamen Abflusskanal münden, der insbesondere zwischen den Siebwandelementen und/oder unterhalb der Siebwandelemente ausgebildet ist.

4. Anordnung nach einem der vorangehenden Ansprüche, wobei die Kassetteneinheiten (11, 11.1-11.4, 11.1'-11.1ⁿ, 11.2'-11.2ⁿ) aneinanderreihbar sind, um das Siebwandelement (2, 2.1, 2.2) in der gewünschten Grösse zusammenzustellen, wobei die Kassetteneinheiten insbesondere viereckig und/oder länglich ausgebildet sind und insbesondere horizontal und/oder vertikal aneinanderreihbar sind.

5. Anordnung nach einem der vorangehenden Ansprüche, wobei die Kassetteneinheiten (11, 11.1-11.4, 11.1'-11.1ⁿ, 11.2'-11.2ⁿ) beabstandet angeordnete Wände (14.1, 14.2, 14.1', 14.1 ", 14.2', 14.2") und/oder Zwischenwände (15.1. 15.2, 15.1', 15.1", 15.2', 15.2") enthalten, welche Wände beziehungsweise Zwischenwände insbesondere mittels Verbindungselementen (18.1, 18.2) miteinander verbunden und/oder gegeneinander verspannt sind.

6. Anordnung nach Anspruch 5, wobei die Wände (14.1, 14.2, 14.1', 14.1". 14.2', 14.2") und/oder Zwischenwände (15.1, 15.2, 15.1', 15.1", 15.2', 15.2") der Kassetteneinheiten (11, 11.1-11.4, 11.1'-'11.1ⁿ, 11.2'-11.2ⁿ) als Doppelwände und/oder Abflussspalte (21, 21.1, 21.2, 22.1, 22.2) ausgebildet sind.

7. Anordnung nach einem der Ansprüche 5 oder 6, wobei der Abstand zwischen zwei Wänden (14.1, 14.2, 14.1', 14.1", 14.2', 14.2") und/oder Zwischenwänden (15.1, 15.2, 15.1', 15.1 ", 15.2', 15.2") und/oder der Abstand zwischen den beiden Seiten (14.1', 14.1", 14.2', 14.2". 15.1', 15.1", 15.2', 15.2") einer Doppelwand durch Distanzelemente (24, 24.1, 24.2) bestimmt ist.

8. Anordnung nach einem der vorangehenden Ansprüche, wobei die Abflussspalten (21, 21.1, 21.2, 22.1, 22.2) zur Abflussseite (13) hin offen sind.

9. Anordnung nach einem der vorangehenden Ansprüche, wobei die Siebtaschen (17, 17.1-17.n. 17.1'-17.n^{m}) jeweils auf vier Seiten von Abflussspalten (21, 21.1, 21.2, 22.1, 22.2) umgeben sind.

10. Anordnung nach einem der Ansprüche 5 bis 9, wobei die Kassetteneinheiten (11, 11.1-11.4, 11.1'-11.1ⁿ, 11.2'-11.2ⁿ) zwischen den Wänden (14.1, 14.2, 14.1', 14.1", 14.2', 14.2") beziehungsweise Zwischenwänden (15.1, 15.2, 15.1', 15.1 ", 15.2', 15.2") gebogene, insbesondere im Wesentlichen u-förmig gebogene, perforierte Wandsegmente (16, 16.1-16.n) enthalten, um die Siebtaschen (17, 17.1-17.n, 17.1'-17,n^{m}) zu bilden.

11. Anordnung nach einem der vorangehenden Ansprüche, wobei die Siebtaschen (17, 17.1-17.n, 17.1'-17.n^{m}) eine Tiefe von grösser als 0.1 m, insbesondere grösser als 0.2 m aufweisen.

12. Anordnung nach einem der Ansprüche 5 bis 11, wobei die Wände (14.1, 14.2, 14.1', 14.1 ", 14.2', 14.2") und/oder Zwischenwände (15.1, 15.2, 15.1', 15.1", 15.2', 15.2") und/oder die perforierten und gebogenen Wandsegmente (16, 16.1-16.n) aus perforiertem Blech gefertigt sind.

## Claims

1. An arrangement including one or more screen walls in order to screen off one or more suction spaces (3) and the suction ducts attached thereto in an emergency cooling system of a nuclear power plant, said screen wall (1) or screen walls including at least one screen wall element (2, 2.1, 2.2) having an inlet side (12) and an outflow side (13), **characterized in that** the inlet side (12) is oriented inclined or vertically, **in that** the screen wall element (2, 2.1, 2.2) is built up of one or more modular cassette units (11, 11.1-11.4, 11.1'-11.1n, 11.2'-11.2n); and **in that** the cassette units each contain a plurality of screen elements (17, 17.1-17n, 17.1'-17.nm) open towards the inlet side (12), said screen elements being formed as screen pockets which are surrounded by outflow gaps (21, 21.1, 21.2, 22.1, 22.2), said outflow gaps being connected to the outflow side (13).

2. An arrangement in accordance with claim 1, wherein the height of the screen wall element (2, 2.1, 2.2) is greater than 0.5 m and in particular greater than 1 m.

3. An arrangement in accordance with one of the claims 1 or 2, including at least two screen wall elements (2, 2.1, 2.2), the outflow sides (13) of which are orientated facing one another and open into a common outflow passage which is formed in particular between two screen wall elements and/or below the screen wall elements.

4. An arrangement in accordance with any one of the preceding claims, wherein the cassette units (11, 11.1 - 11.4, 11.1' - 11.1ⁿ, 11.2' - 11.2ⁿ) can be arranged in series in order to assemble the screen wall element (2, 2.1, 2.2) in the desired size, with the units in particular being of four cornered shape and/or of elongate shape and in particular being able to be arranged in rows horizontally and/or vertically adjacent one another.

5. An arrangement in accordance with any one of the preceding claims, wherein the cassette units (11, 11.1-11.4, 11.1'-11.1ⁿ, 11.2'-11.2ⁿ) have walls (14.1, 14.2, 14.1', 14.1", 14.2', 14.2") arranged spaced apart and/or include intermediate walls (15.1, 15.2, 15.1', 15.1", 15.2', 15.2") which walls or intermediate walls are in particular connected together and/or clamped against one another by means of connecting elements (18.1, 18.2).

6. An arrangement in accordance with claim 5, wherein the walls (14.1, 14.2, 14.1', 14.1", 14.2', 14.2") and/or intermediate walls (15.1, 15.2, 15.1', 15.1", 15.2', 15.2") of the cassette units (11, 11. 1 - 11.4, 11.1' - 11.1ⁿ, 11.2' - 11.2ⁿ) are formed as double walls and/or outflow gaps (21, 21.1, 21.2, 22.1, 22.2).

7. An arrangement in accordance with one of the claims 5 or 6, wherein the spacing between two walls (14.1, 14.2, 14.1', 14.1", 14.2', 14.2") and/or intermediate walls (15.1, 15.2, 15.1', 15.1", 15.2', 15.2") and/or the spacing between the two sides (14.1', 14.1", 14.2', 14.2", 15.1', 15.1", 15.2', 15.2") of a double wall is determined by spacer elements (24, 24.1, 24.2).

8. An arrangement in accordance with any one of the preceding claims, wherein the outflow gaps (21, 21.1, 21.2, 22.1, 22.2) are open towards the outflow side (13).

9. An arrangement in accordance with any one of the preceding claims, wherein the screen pockets (17, 17.1-17.n, 17.1' -17.n^{m}) are each surrounded on four sides by outflow gaps (21, 21.1, 21.2, 22.1, 22.2).

10. An arrangement in accordance with any one of the claims 5 to 9, wherein the cassette units (11, 11.1 - 11.4, 11.1' - 11.1ⁿ, 11.2' - 11.2ⁿ) between the walls (14.1, 14.2, 14.1', 14.1", 14.2', 14.2") or intermediate walls (15.1, 15.2, 15.1', 15.1", 15.2', 15.2") respectively include bent, in particular essentially U-shaped, perforated wall sections 16, 16.1-16.n) in order to form the screen pockets (17, 17.1 - 17.n, 17.1'-17.n^{m}).

11. An arrangement in accordance with any one of the preceding claims, wherein the screen pockets (17, 17.1 - 17.n, 17.1' -17.n^{m}) have a depth greater than 0.1 m and in particular greater than 0.2 m.

12. An arrangement in accordance with any one of the claims 5 to 11, wherein the walls (14.1, 14.2, 14.1', 14.1", 14.2', 14.2") and/or intermediate walls (15.1, 15.2, 15.1', 15.1", 15.2', 15.2") and/or the perforated and bent wall segments (16, 16.1-16.n) are manufactured of perforated sheet metal.

## Revendications

1. Agencement constitué d'une ou de plusieurs parois de tamisage pour protéger une ou plusieurs enceintes d'aspiration (3) et les conduits d'aspiration reliés à celles-ci dans un système de refroidissement de secours d'une centrale nucléaire, ladite paroi de tamisage (1) respectivement lesdites parois de tamisage présentant chacune au moins un élément de paroi de tamisage (2, 2.1, 2.2) qui présente un côté d'admission (12) et un côté d'écoulement (13), **caractérisé en ce que** le côté d'admission (12) est orienté selon une inclinaison ou verticalement, **en ce que** l'élément de paroi de tamisage (2, 2.1, 2.2) est constitué d'une ou de plusieurs unités de cassettes modulaires (11, 11.1-11.4, 11.1'-11n, 11.2'-11.2n), et **en ce que** les unités de cassettes contiennent respectivement plusieurs éléments de tamisage (17, 17.1, 17.n, 17.1'-17.nm) ouverts vers le côté d'admission (12), lesdits éléments de tamisage étant réalisés comme poches de tamisage qui sont entourées par des fentes d'écoulement (21, 21.1, 21.2, 22.1, 22.2), lesdites fentes d'écoulement étant reliées au côté d'écoulement (13).

2. Agencement selon la revendication 1, où la hauteur de l'élément de paroi de tamisage (2, 2.1, 2.2) est plus grande que 0,5 m et en particulier plus grande que 1 m.

3. Agencement selon l'une des revendications 1 ou 2, comprenant au moins deux éléments de paroi de tamisage (2, 2.1, 2.2) dont les côtés d'écoulement (13) sont orientés l'un contre l'autre et débouchent dans un canal d'écoulement commun qui est réalisé en particulier entre les éléments de paroi de tamisage et/ou en dessous des éléments de paroi de tamisage.

4. Agencement selon l'une des revendications précédentes, où les unités de cassettes (11, 11.1-11.4, 11,1'-11.1ⁿ, 11.2'-11.2ⁿ) peuvent être mises à la file pour former l'élément de paroi de tamisage (2, 2.1, 2.2) dans la grandeur souhaitée, où les unités de cassettes sont réalisées en particulier d'une manière quadrangulaire et/ou oblongue et peuvent être mises à la file en particulier horizontalement et/ou verticalement.

5. Agencement selon l'une des revendications précédentes, où les unités de cassettes (11, 11.1-11.4, 11.1'-11.1ⁿ, 11.2'-11.2ⁿ) présentent des parois espacées (14.1, 14.2, 14.1', 14.1", 14.2', 14.2") et/ou des parois intermédiaires. (15.1, 15.2, 15.1', 15.1", 15.2', 15.2"), lesdites parois respectivement parois intermédiaires étant reliées entre elles et/ou mises en tension les unes contre les autres en particulier par des éléments d'assemblage (18.1, 18.2).

6. Agencement selon la revendication 5, où les parois (14.1, 14.2, 14.1', 14.1", 14.2', 14.2") et/ou les parois intermédiaires (15.1, 15.2, 15.1', 15.1", 15.2', 15.2") des unités de cassettes (11, 11.1-11.4, 11.1'-11.1ⁿ) sont réalisées comme parois doubles et/ou comme fentes d'écoulement (21, 21.1, 21.2, 22.1, 22.2).

7. Agencement selon l'une des revendications 5 ou 6, où l'écart entre deux parois (14.1, 14.2, 14.1', 14.1", 14.2', 14.2") et/ou parois intermédiaires (15.1, 15.2, 15.1', 15.1", 15.2', 15.2") et/ou l'écart entre les deux côtés (14.1', 14.1", 14,2', 14.2", 15.1', 15.1", 15.2', 15.2") d'une paroi double est déterminé par des éléments d'écartement (24, 24.1, 24.2).

8. Agencement selon l'une des revendications précédentes, où les fentes d'écoulement (21, 21.1, 22.2, 22.1, 22.2) sont ouvertes vers le côté d'écoulement (13).

9. Agencement selon l'une des revendications précédentes, où les poches de tamisage (17, 17.1-17.n, 17.1'-17.n^{m}) sont entourées respectivement sur quatre côtés par des fentes d'écoulement (21, 21.1, 21.2, 22.1, 22.2).

10. Agencement selon l'une des revendications 5 à 9, où les unités de cassettes (11, 11.1-11.4, 11.1'-11.1ⁿ , 11.2-11.2ⁿ) présentent entre les parois (14-.1, 14.2, 14.1',14.1" ,14.2',14.2 ") respectivement parois intermédiaires (15.1, 15.2, 15.1', 15.1", 15.2', 15.2") des segments de paroi perforés et pliés, (16, 16.1-16.n) pliés en particulier sensiblement en forme de u pour former les poches de tamisage (17, 17.1-17.n, 17.1'-17.n^{m}).

11. Agencement selon l'une des revendications précédentes, où les poches de tamisage (17, 17.1-17.n, 17.1'-17.n^{m}) ont une profondeur supérieure à 0,1 m, en particulier supérieure à 0,2 m.

12. Agencement selon l'une des revendications 5 à 11, où les parois (14.1, 14.2, 14.1',14.1" ,14.2', 14.2") et/ou parois intermédiaires (15.1, 15.2, 15.1', 15.1", 15.2', 15.2") et/ou les segments de paroi perforés et pliés (16, 16.1-16.n) sont fabriqués en tôle perforée.
